# EUROPEAN PATENT APPLICATION

(11) **EP 1 134 942 A1**
(43) Date of publication of application: **19.09.2001**
(21) Application number: 00850045.6
(22) Date of filing: 15.03.2000
(51) Int. Cl.: H04L 12/56, H04L 29/06

(54) **Method and arrangement for control of non real-time application flows**

(71) Applicant: Telefonaktiebolaget L M Ericsson (Publ), 126 25 Stockholm (SE)
(72) Inventor: Sundqvist, Jim, 976 32 Lulea (SE)
(74) Representative: Nyberg, Bengt

(57) **Abstract**

The present invention relates to a method and an arrangement for flow control based on information provided in a set-up message for a real-time application. The invention restricts the bandwidth of non real-time application flows in and out of a terminal so that application flows associated with the real-time application are guaranteed the bandwidth that said flows require according to what is derived from the information in the set-up message (51). The invention thus provides a quick adjustment to new real-time application flows by restricting non real-time application flows as soon as the set-up message for said real-time application flows is received (50). The invention reduces unnecessary retransmissions of data packets on the non real-time application flows and improves the communication quality for the real-time application at the beginning of a communications session.

## Description

### FIELD OF THE INVENTION

The present invention relates to flow control in a communications system and to control of flows to and from applications on a terminal in a communications system in particular.

### BACKGROUND OF THE INVENTION

Terminals in a communications system, wireline or wireless, have access to a certain limited bandwidth for communication with other terminals. The available bandwidth can be shared by different flows of information, e.g. information to and from different applications on the terminal.

Information that is sent in a communications network is often checked and controlled so that it is directed to the right receiver, is not distorted, is delivered in time etc. Handling of the flows of information is simplified by means of protocols in several layers. In packet switched networks today is the protocol stack TCP/IP very common. It includes four layers; a physical layer (also called data link layer), an Internet layer, a transport layer and an application layer. The layers are relatively independent of each other and have different purposes and tasks. The layers simplify the handling of flows since for instance a person involved in design work can focus on one layer at a time without having to take in consideration how the other layers work. With each layer are one or several protocols associated.

The physical layer provides a uniform bit stream on some kind of transmission media. It can also check and compensate for errors in the bit stream. Associated with the physical layer are protocols that are interfaces towards different types of networks, such as for instance Ethernet, Token Ring and X.25.

Within the Internet layer addressing, routing and fragmentation are handled by IP (Internet Protocol). IP is responsible for logical addresses, called IP addresses, and for moving data between the physical layer and the transport layer. IP defines the structure of data packets, which are called datagrams.

The protocols of the transport layer are responsible for the transport of data between terminals or hosts and for data being delivered to the right application in the application layer. The transport protocols will also package data in segments of suitable size for transportation through the Internet system. The two transport protocols in TCP/IP are UDP (User Datagram Protocol) and TCP (Transmission Control Protocol).

UDP is a connectionless protocol, which does not include any mechanisms for flow control or error correction. UDP works simply as a multiplexer/demultiplexer for transmission and reception of datagrams. Port numbers are used to send the datagrams to the right application. UDP is especially suited for real time services where retransmissions due to lost or erroneous packets are out of scope due to the real time requirements. Examples of such services are VoIP (Voice over IP) and video.

TCP is a connection oriented protocol which provides a reliable data transfer between two hosts. Port numbers are used, as in UDP, to separate data flows to different applications on a terminal or host. TCP includes a number of mechanisms or procedures, which serve to make the transfer of data reliable. A connection between a source node and a destination node is set up by TCP by means of a three-way handshake. First a synchronisation signal is sent from the source node to the destination node. The destination node returns an acknowledgement (ACK), and also its own synchronisation signal, to the source node. The source node acknowledges that signal, whereby a connection is established and the transfer of data can now be carried out in a reliable way. The established reliable connection is unique and is identified by the communicating parties' IP addresses and by the port numbers that are used for the connection. Each data packet that is transferred is sent together with a sequence number, which is used to reassemble the data in the right order in the destination node and to keep track of the number of bytes that have been sent. TCP expects an acknowledgement (ACK) from the destination node for each packet. If an ACK is not received within a certain period of time, the current data packet is resent. TCP includes means for flow control in the form of a so-called window mechanism. It relies upon that TCP in a destination node, along with an ACK, also sends a window size, which indicates the number of additional bytes that the destination node can receive, at the moment, without risking overrun in internal buffers. The window size is sent in the form of the highest sequence number that the receiving application can receive without difficulty. TCP is used for data transferring services such as file transfer by FTP (File Transfer Protocol) and Telnet, for which it usually is important that each byte of data that is sent, reaches its destination.

As mentioned above UDP and TCP are used for different types of applications. UDP is preferably used for real time applications and TCP for non-real time applications. If several applications are active on a terminal at the same time and communicating with other units in the communications network these applications will compete for the available bandwidth. If a first application is a real time application using UDP and a second application a non-real time application using TCP, there will be a competition for bandwidth between TCP-flows and UDP-flows. It is most critical for the packets on the UDP flow to arrive in time and not be unnecessarily delayed. A real time data packet that is delayed more than a specified limit has no value and is thrown away. For a TCP data packet it is more important that it gets to its destination than when it gets there. If a TCP packet has not reached its destination or is believed not to have reached its destination the packet will be resent as explained above. Since it is less critical to delay a TCP packet than a UDP packet and since TCP comprise the flow control mechanism mentioned above, a competition for bandwidth between a UDP flow and a TCP flow will result in the TCP flow eventually backing off, if necessary, to give the UDP flow the bandwidth it needs.

The application layer includes hundreds of application protocols. A few examples are Telnet, FTP, SMTP and HTTP. Some applications simply rely on a transport protocol in the transport layer, instead of using a special application protocol.

In the European patent application EP-924902 and in the international patent application WO98/20511 methods for controlling flows of data in communications networks are described. In said European patent application bandwidth control is achieved by adjusting the window size in TCP to a value, which is a function of the used bandwidth and the desired bandwidth. In said international patent application flow control is achieved by introducing a controllable delay of ACK-messages and by adjusting the window size.

In the international patent application WO99/16266 flow control is described, which aims at letting a communications system direct application flows to the type of bearer service, e.g. a circuit switched or a packet switched bearer service, which is most suitable for the application, and to adjust QoS (Quality of Service) parameters according to the demands of the current application.

### SUMMARY OF THE INVENTION

A problem with a mix of non-real time and real time flows on a communications connection in a communication system is that both types of flows may be affected by undesirable disturbances caused by the competition for the limited available bandwidth with other flows. The real time flows may be subject to undesirable delays and the non-real time flows may experience unnecessary retransmission.

An object of the present invention is thus to provide a method and an apparatus for lessening the undesirable affects on the different types of application flows that arise from their competition for the limited available bandwidth.

The present invention solves the problem mentioned above by using information provided in a set-up message for a real time communications application to reduce the bandwidth used by non-real time application flows on a communications connection in order to provide the real time application flows with the bandwidth they require on the communications connection.

With a set-up message for a real time communications application follows information on the encoding method to be used, which reveals the bandwidth needed for real-time application flows associated with the application. This information is according to the invention used to control non-real time application flows so that they don't use more bandwidth than to leave said needed bandwidth to the real time application flows. If it is necessary in order to guarantee said needed bandwidth to the real time application flows, the bandwidth used by the incoming and/or outgoing non-real time application flows is reduced. The bandwidth used by incoming non-real time application flows is reduced by manipulating a protocol flow control parameter and the bandwidth used by outgoing non-real time application flows is reduced by manipulating sending times of data packets.

An embodiment of the invention provides a possibility to limit an outgoing non-real time application flow by means of a flow control application queuing packets out from the non-real time application and supervising their sending times thus controlling the data flow out from the non-real time application.

Another embodiment of the invention provides a possibility to limit an incoming non real-time application flow by means of a flow control application overwriting a computed window size with a lower value, which is then, according to TCP or a similar protocol, reported as the current window size to a communications partner.

An advantage of the present invention is that in the start up of a new real time application flow not all available bandwidth will be blocked with non real-time application traffic, which otherwise would lead to queuing of data packets on the real-time application flow causing an additional delay for consecutive data packets on both real-time and non real-time application flows. These additional delays can thus be avoided with the present invention.

Another advantage with the present invention is that unnecessary retransmissions of data packets on non real-time application flows can be avoided. The additional delays, described above, which might occur when non real-time application traffic block bandwidth for real-time application traffic at the start up of a real-time application flow, can cause a sending side to retransmit packets which have been additionally delayed. This in spite there being no need for retransmission, since the packets are not lost but are on the way to a receiving side. Such retransmissions due to a misinterpreted situation can be avoided by means of the present invention. Since unnecessary retransmissions are a complete waste of bandwidth the present invention will lead to a reduced waste of bandwidth, which is very valuable when bandwidth is scarce.

Another advantage with the present invention is that start up of a real-time application flow will be quicker and smoother by means of the invention. In prior art systems problems with jitter are larger in the beginning of a real-time communications session than later during the session when the real-time application flows have managed to somewhat "take" bandwidth from non real-time application flows. The present invention will reduce the jitter and thereby improve the quality at the beginning of the real-time communications session.

Yet another advantage with the present invention is that it only requires adjustments in a user's terminal. The invention requires no adjustments, in order to be used and implemented on the terminal, in other parts of the communications system, with which the terminal can communicate.

The invention will now be described with the aid of preferred embodiments and with reference to accompanying drawings.

### BRIEF DESCRIPTION OF THE DRAWINGS

Fig. 1 shows a block schedule over a terminal, its physical connection and application flows.
Fig. 2 shows a flow chart over steps performed by an inventive real-time application.
Fig. 3 shows a diagram over the format of the TCP header.
Fig. 4 shows a schedule over the layers of the TCP/IP protocol stack and over a packet passing through and being assembled in the layers.
Fig. 5 shows a flow chart over steps performed by an embodiment of a Flow Control Application according to the present invention.
Fig. 6 shows a state diagram over an embodiment of a Flow Control Application according to the present invention.
Fig. 7 shows a flow chart over steps performed by an embodiment of an inventive Flow Control Application.

### DETAILED DESCRIPTION OF SPECIFIC EMBODIMENTS

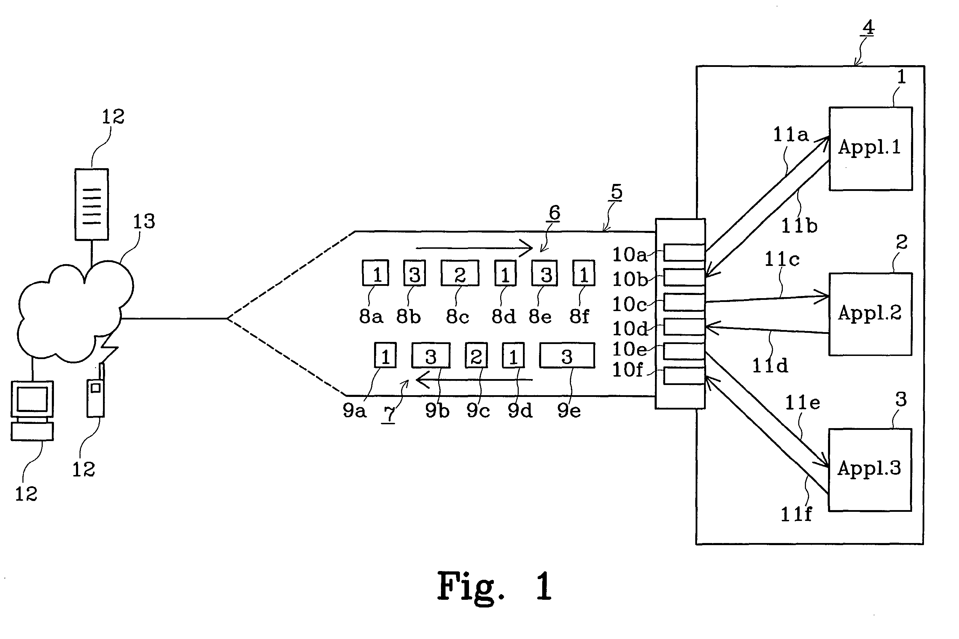

Fig. 1 shows a block schedule that demonstrates, on a basic and logical level, how applications 1, 2, 3 on a terminal 4 communicate via a physical connection 5 with other distant applications on terminals or servers 12 connected to the same packet switched communications network 13. The terminal 4 could for instance be a personal computer and the physical connection 5 a modem connection. The terminal 4 could also be a mobile phone or some other kind of wireless terminal. In that case the physical connection 5 would be an airborne radio connection. Independent of what type of terminal 1 and physical connection 5 is considered the bandwidth that can be used to communicate over the physical connection 5 is limited. Fig. 1 shows three active applications 1, 2, 3 on the terminal 4 that receive and send information over the physical connection 5. Assume for instance that the application 1 is a non real-time application that is used to download e-mails from a distant mail server and to read, write and send e-mails. Further assume that the application 2 is an application that is used to download a file from a server using FTP, and assume that the application 3 is a real-time IP telephony application that is used for communicating voice information in IP packets and thus provides packet switched phone calls. The non real-time applications 1, 2 use TCP as a transport protocol and the real-time application uses UDP as transport protocol. The applications will give rise to incoming and outgoing data traffic, which travels through the physical connection 5 in an incoming channel 6 and an outgoing channel 7. Each channel has a certain limited bandwidth that limits the number of bytes of data that can pass through the physical connection per time unit. The three applications 1, 2, 3 have to share the available bandwidth. The most common situation in previously known systems is that the real-time and non real-time applications compete for the available bandwidth and that the real-time flow eventually pushes non real-time flows away to get the bandwidth it requires. The applications communicate with data packets. In fig. 1 a number of incoming data packets 8a-8f are shown as boxes marked with a number that indicates to which application 1, 2, 3 the data packet is destined. A number of outgoing data packets 9a-9e are shown in a corresponding way, marked with a number indicating which application the data packet has originated from. As mentioned above port numbers are used to separate application flows on a computer. This is symbolically shown in fig. 1 as a number of ports 10a-10f, each one associated with either an incoming or an outgoing application flow 11a-11f. An incoming data packet 8 is marked with the port number that is associated with the application flow 11 that the packet is destined for. The port number thus works as an address that ensures that the data packet ends up on the right application flow. Observe that fig. 1 only is used to show the basic usage of port numbers. Port numbers and application flows can be utilised in more complicated ways in reality. The port number associated with a certain application flow may for instance change during a communication session or there may be more than one incoming and outgoing application flow associated with one application.

Now let us picture the user of the terminal 4 has previously activated the above-mentioned non real-time applications 1 and 2. He now activates the real-time application 3. We assume for this example that the terminal 4 is the users personal computer (PC), which does not make use of the invention and that the physical connection 5 is a modem connection. Suppose that the total bandwidth of the connection 5 into the terminal 4 is 128 kbit/s and that the incoming non-real time application flows 11a, 11c each use approximately 64 kbit/s before the real-time application has been activated. The real-time application will use an encoder which requires an incoming application flow lie to the terminal 4 with a bandwidth of 56 kbit/s. As soon as the IP telephony session that is provided by the real-time application 3 have begun, data packets corresponding to a bandwidth of 56 kbit/s will try to reach the application 3 on the incoming application flow 11e. Since the non-real time application flows already use all the available bandwidth data packets into the terminal will have to be queued. This causes delays for data packets associated with all the incoming application flows 11a, 11c and 11e. The real-time application lie will continue to try to get the 56 kbit/s of bandwidth that it needs. However, when the non real-time applications 1 and 2 experience increased delays, they will use a flow control mechanism in TCP to signal to the parties with whom they are communicating to slow down their sending of data packets into the terminal 4. This will result in the non real-time application flows 11a, 11c backing down until the real-time application flow has received the 56kbit/s of bandwidth that it needs. The result in this example would probably be that the application flows eventually stabilises at the non real-time application flows 11a, 11c each using approximately 36 kbit/s and the real-time application flow 11e using 56kbit/s. The scenario for the outgoing application flows 11b, 11d, 11f would be analogous with the scenario described for the incoming flows, with the only difference that the non real-time application flows 11b, 11d can be downsized directly by the application 1, 2, without having to signal to the party with which they are communicating.

Some drawbacks with the example situation above is as mentioned that data packets on both the real-time and non real-time application flows will experience additional delay before the flows have adjusted to the bandwidth need of the new real-time application flow. The additional delays can cause a party with which the non real-time application 1 or 2 is communicating to retransmit non real-time packets, which have been additionally delayed. This in spite there being no need for retransmission, since the packets are not lost but are on the way to the application 1, 2. Such retransmissions due to a misinterpreted situation waste bandwidth. Another drawback is that the communication quality of the IP telephony session provided by the application 3 would be poor before the application flows 11e and 11f have managed to take the bandwidth that they need. This is due to delay variations of data packets, so called jitter, and that real-time data packets, which have been delayed more than a certain time limit, will be thrown away. The drawbacks mentioned can to a great extent be avoided by means of the present invention.

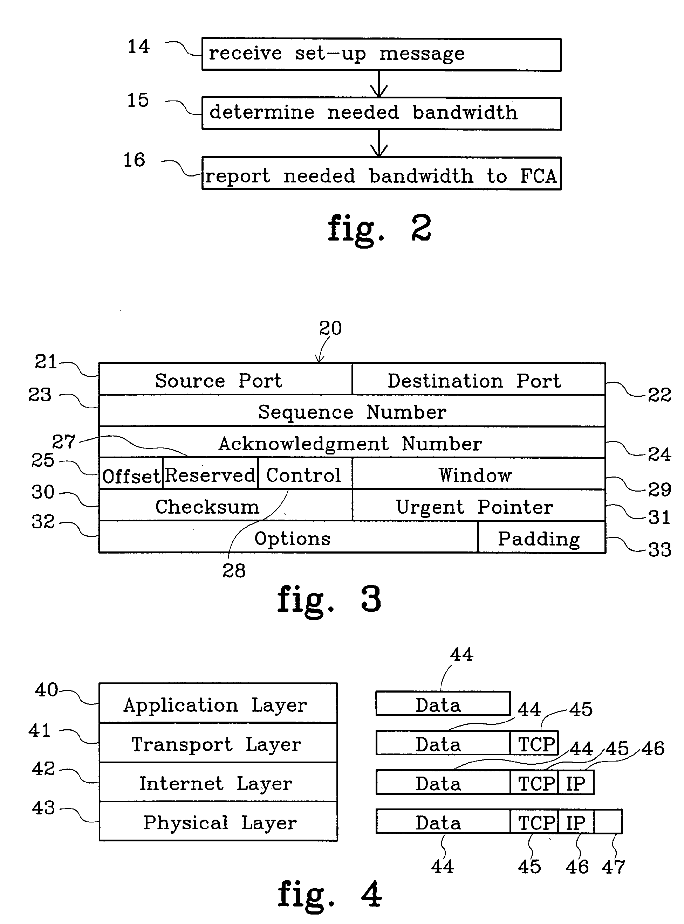

Prior to an actual real-time communications session, the real-time applications to be engaged in the session exchange information regarding which source encoder they will use respectively. This information is sent in a set-up message and the receiver of the set-up message acknowledges that it can decode what the sender of the message is encoding. Different types of standards with different types of set-up can be used for real-time applications. For example, there are at the moment two competing standards for an IP telephony session; the ITU-T recommendation H.323 and SIP (Session Initiation Protocol), which is being standardised within IETF. Within the recommendation H.323 is a so-called "fast start" defined in which negotiations regarding the type of encoder is avoided and in which it is assumed that a default encoder is used. Irrespective of the type of set-up that is used the encoding method will be revealed during the session set-up. The invention makes use of this fact. According to the invention adjustments are made to the real-time application so that it may perform the steps described in fig. 2. In a first step 14 the application receives the set-up message for the real-time communications session. The application determines, step 15, from the information in the set-up message regarding the encoding method to be used by the sending side, the bandwidth needed for an incoming application flow associated with the communications session. The amount of bandwidth needed for an outgoing application flow associated with the communications session is computed from the knowledge about what encoding method the application itself uses. The needed bandwidth for the real-time application flows is then reported to an inventive Flow Control Application (FCA), step 16.

Note that even though there is no negotiation about which type of encoder to use in the "fast start", a message in the fast start is still considered to be a set-up message comprising information that reveals the bandwidth to be used for the connection to be set up. The information in this case is in the form that since the "fast start" is used it should be presumed that the default encoder is to be used which requires a certain amount of bandwidth.

The FCA of the invention uses an already existing flow control mechanism in TCP or similar mechanism in a future protocol to regulate non real-time application flows based on said information received by a real-time application about the future bandwidth need of the incoming real-time application flow to be set up. In order to understand the functioning of the FCA, the TCP protocol and its flow control mechanism will be explained-further.

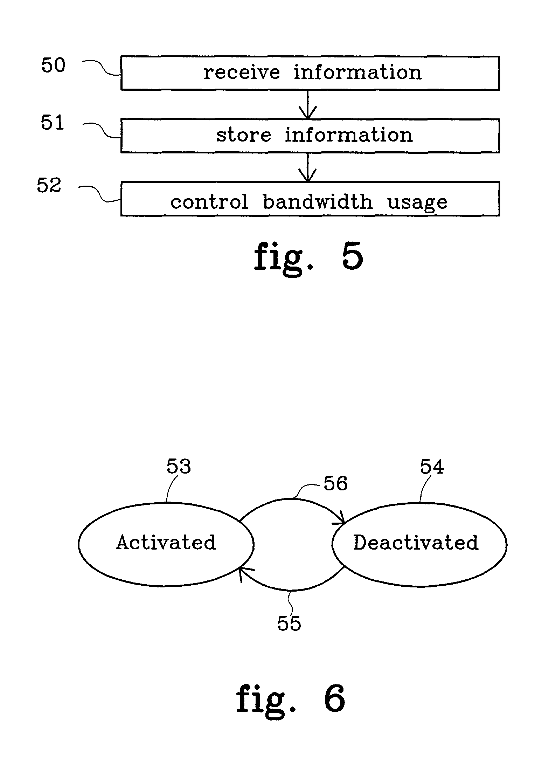

Fig. 3 shows the format of a TCP header 20. The TCP header carries information specific for TCP in different fields. The field 21 comprises the source port number and the field 22 comprises the destination port number. Both of these fields are 8 bits. The field 23 is 32 bits and includes a sequence number which, as mentioned above, is used to reassemble the data in the right order in the destination node and to keep track of the number of bytes that have been sent. The field 24 is used for acknowledgements to indicate to the receiver of the acknowledgement that a certain packet has been received. If an ACK control bit is set, the field 24 will contain the value of the next sequence number the sender of the current packet is expecting to receive. The field 25 is four bits and indicates the size of the TCP header in order for the receiver to know where the header ends and where the accompanying data begins. The field 27 is reserved for future use and the field 28 includes 6 control bits, of which one is the ACK control bit. The field 30 comprises a checksum, which is used to check for errors in the packet. The checksum is a function of the contents in the other fields of the packet. The field 31 can contain a so-called urgent pointer and the field 32 can vary in size and can contain options information. The field 33 contains a TCP header padding, which is used to ensure that the header is an integral number of 32 bits long. A field that is of great significance to the invention is the window-field 29. The window-field contains information on the number of additional bytes of data that the sender of this segment is willing to accept and is used for flow control. It is normally used when the application for which the data is intended doesn't manage to handle all the received data. For an application flow into a first application on a first terminal a window size will be computed that indicate how many additional bytes that can be received in the internal buffers that are set up for the application flow. The window size is transmitted in the window field with an ACK and indicates to a second application, with which the first application is communicating the maximum number of additional bytes that the second application can send to the first application. The invention uses the window-mechanism to restrict non real-time application flows at an early stage in order to guarantee a real-time application flow that it gets the bandwidth it requires from the instant it is set up. The Flow Control Application (FCA) of the invention can overwrite the computed window size with a lower value for an incoming non real-time application flow that needs to be reduced to leave room to an incoming real-time application flow. The sender of the data on the incoming non real-time application flow will receive this downsized window with an ACK and will adjust its sending rate to this reported window size. This will result in a decreased byte rate on the non real-time application flow, which thus occupies a smaller bandwidth than it would have if the computed window size hadn't been replaced by a lower value.

As mentioned above layered protocol structures are used to simplify the handling of protocols and TCP is a protocol that belongs to the transport layer in the TCP/IP protocol suite. The invention uses the already existing mechanism for flow control in TCP, but that does not mean that the FCA of the invention is limited to work in the transport layer. It can also be implemented to work in the Internet layer or in the physical layer.

Fig. 4 shows, schematically, a data packet being assembled and travelling through the layers of the TCP/IP protocol stack. The data 44 to be sent in a data packet is formed in the application layer 40. The data 44 is often called the payload of a data packet. In the transport layer 41 a TCP header 45 is added (provided that TCP is the transport protocol to be used). The TCP header 45 will, as described above, among other things contain the window field. After the transport layer, the half-built data packet will reach the Internet layer 42 where an IP header 46 is added. The IP header 46 will contain for instance an IP-address and a checksum. In the physical layer 43, a header 47 will be added containing for instance a physical address and a checksum. The type of header 47 will depend on the physical layer protocol used. It will be possible for the FCA to overwrite a value in the window field in the TCP-header 45 in any of the layers below the application layer. However when a value in the packet changes, the checksums that already have been computed and added to the packet will have to be recalculated. To implement the FCA to work in the transport layer would therefore be the option requiring the least checksum recalculations. In addition it is probably most natural to let the FCA work in the transport layer, since it is in this layer that the window size, that the FCA might overwrite, is computed and added to the packet.

The FCA can be implemented in software and/or hardware on the terminal. It will in most cases probably be preferable to implement it in software.

Fig. 5 shows a flowchart of the FCA works according to one embodiment of the invention. The FCA receives information from the real-time application that a real-time communications session is to be set up and information on the amount of bandwidth that the real-time application flow or flows associated with the session will require, step 50. This information is stored in a memory in the terminal, step 51. The FCA will then control non real-time application flows in and out from the terminal in order to make sure that the real-time application flows are guaranteed the bandwidth they need in to and out from the terminal, step 52, when these flows get started. If non real-time application flows already are using so much bandwidth that there is not free bandwidth for the real-time application flows to the extent that they will need, the FCA will reduce the bandwidth used by the non real-time application flows. Thereby preparations are made in advance so that the real-time application flows can get the bandwidth they need as soon as they get started. The mentioned situation when non real-time traffic block real-time traffic and non real-time traffic eventually is "pushed away" by real-time traffic is thus avoided by using the invention. The non real-time application flows will be brought down to a lower bandwidth usage by the FCA, when it is necessary to make room for coming real-time application flows. Therefore no unnecessary retransmissions as described above will arise at the beginning of a real-time communications session when the invention is used. When the real-time application flows have got started, the control of non real-time application flows is no longer required in association with this real-time communications session. The control can then be interrupted and the FCA deactivated. The reason for this is that once the real-time application flow is using the bandwidth that it needs, non real-time application flows can not grow to take bandwidth away from the real-time application flow.

The FCA will thus according to this embodiment move between an activated state 53 and a deactivated state 54 as shown in fig. 6. The FCA is activated by an event 55, which is the event when the FCA receives the information from the real-time application that a real-time communications session is to be set up. The FCA is deactivated by an event 56, which is the event when a first indication is received that the real-time application flows have started, e.g. when the first data packets that is associated with the real-time application flows have been detected.

The FCA will have to decide if and how much a non-real time application should be reduced. This decision is based on the information received from the real-time application about the bandwidth that the real-time application flows are going to need. Therefore the information on the needed bandwidth will be stored in memory on the terminal. From the information on the needed bandwidth the FCA can compute the maximum amount of bandwidth in to and out from the terminal by non real-time application flows in order to be able to guarantee the real-time application flows the needed bandwidth. This computed maximum amount of bandwidth may optionally also be stored in memory in the terminal.

There are many ways in which existing non real-time application flows may be reduced to make room for new real-time application flows. One alternative may be to place equal maximum limits on bandwidth usage for all the existing non real-time application flows. The sums of all the maximum limits for flows into the terminal must then not exceed said maximum amount of bandwidth in to the terminal that can be used by non real-time application flows, and correspondingly for flows out from the terminal. Other alternatives may be to reduce the non real-time application flows proportionally equal or to make decisions based on some weighting algorithm how much each non real-time application flow should be reduced. No matter what alternative is used the important thing is that the respective computed maximum limits of bandwidth for non real-time applications in to and out from the terminal are not exceeded by the sums of the bandwidth used by non real-time application flows in to and out from the terminal respectively. Depending on what method is used to decide how to reduce non real-time application flows, there may be interesting to compute and store information on how to reduce each flow in for instance a database.

A description has been made above of the window-mechanism that the FCA makes use of to control incoming non real-time application flows. Outgoing non real-time application flows from a terminal can be controlled by means of a bit more straightforward methods. The rate of an outgoing application flow is controlled by queuing the outgoing data packets on the application flow and letting the FCA supervise the timing of the sending of the packets. The application will not produce a new amount of data for the transport layer to transport until it notices that the previous amount of data that was forwarded to the transport layer has been sent. Thus the outgoing data rate from an application can be controlled in this manner.

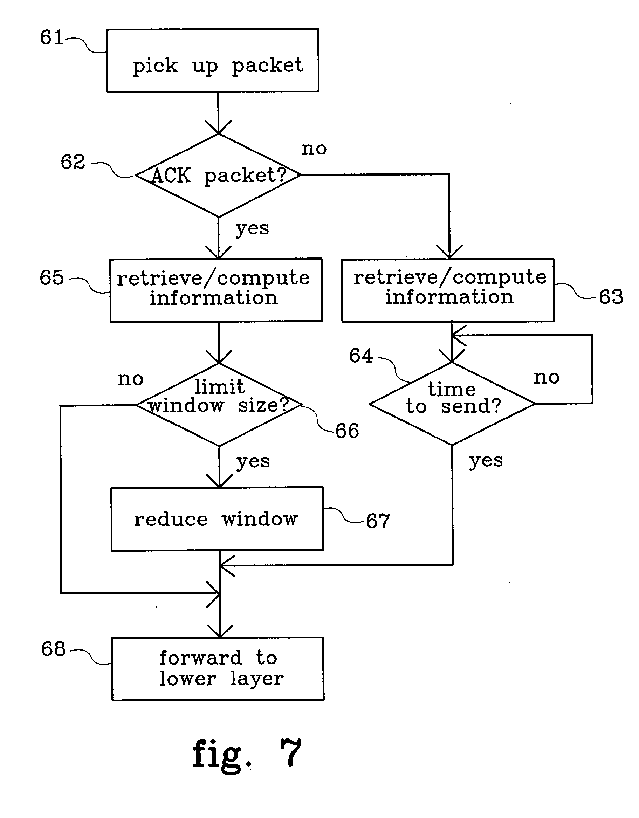

Fig. 7 shows a flow chart over an implementation of an inventive FCA in the transport layer. After the transport protocol has done its work in the assembling of an outgoing packet, the FCA of the invention will pick up the packet, step 61, and check whether or not the packet is an acknowledgement, step 62. If the packet is not an acknowledgement, it is a data packet associated with an outgoing application flow. Depending on, as discussed above, the method that is used to decide on how and if a non-real time application flow should be reduced, the FCA decides based on stored or computed information a sending time for the data packet, step 63. The FCA then checks whether or not it is time to send the packet, step 64. If the data packet is associated with a real-time application flow the data packet will be put forward right away to the next lower layer in the protocol stack, step 68. If on the other hand the data packet is associated with a non real-time application flow it might be of current interest to delay the data packet in order to reduce the bandwidth usage of the application flow with which the data packet is associated. If the outgoing packet is an acknowledgement packet the FCA will, depending on the method that is used to decide on how and if a non-real time application flow should be reduced, retrieve stored information or compute information that is needed to decide how and if the incoming application flow with which the acknowledgement is associated should be controlled, step 65. Based on said stored or computed information the FCA decides whether or not the current window size in the acknowledgement packet, which has been computed by TCP, should be replaced with a lower value, step 66. If the window size is to be reduced, the window size in the TCP header is overwritten with the new lower window value, which is determined by the FCA in accordance with some restriction method as discussed above, step 67. If the window size is overwritten after the checksum in the TCP header has already been calculated, this checksum must be recalculated and updated. If window size is overwritten before the checksum in the TCP header has been calculated there will be no need to recalculate any checksums due to the change of the window size. Then the acknowledgement packet is put forward to the next lower layer in the protocol stack, step 68.

If the invention is implemented in a layer below the transport layer, more than one checksum would have to be recalculated and updated in step 67 of fig. 7, as mentioned above.

Note that acknowledgement packets are not delayed. In order for the flow control to work efficiently acknowledgements are treated as important traffic which will be sent independent of possible restrictions on outgoing application flows.

In the description above of one embodiment of an inventive FCA it was mentioned that the FCA was deactivated once the real-time application flow had started. There are however cases when it is desirable for the FCA to be active up to the end of the real-time communications session. This is when an encoder that uses variable bandwidth is used in the session. In that case it is probably interesting to use the invention to control non real-time application flows so that the maximum bandwidth that the variable bandwidth encoder could use is always available to the real-time application flow. In order to be able to guarantee this bandwidth to the real-time application flow during the whole communications session the FCA is required to be active for the entire session.

## Claims

1. A method for controlling data flows to a terminal in a communications system, which data flows are carried over at least one communications connection with a limited bandwidth and with use of at least one protocol, which method comprises the step of:
receiving, in the terminal, a set-up message for a real-time communications session;
**characterised in**,
the method further comprising the steps of:
deriving from information in' the set-up message a bandwidth required on the communications connection for a real-time application flow to the terminal to be set up in connection with the communications session;
controlling, through manipulation of at least one protocol parameter, the bandwidth usage on the communications connection of at least one data flow to a non real-time application on the terminal so as to ensure that said required bandwidth is instantly available to said real-time application flow when it is set up.

2. A method according to claim 1, **characterised by** the controlling step involving reducing the bandwidth usage on the communications connection of the at least one data flow to a non real-time application in order to free bandwidth on the communications connection for the real-time application flow to be set up.

3. A method according to claim 1 or 2, **characterised by**
a real-time application receiving said set-up message and deriving said required bandwidth from information in the set-up message regarding an encoding method to be used in the real-time communications session;
the real-time application providing a flow control application with information regarding the required bandwidth; and by
the flow control application controlling the bandwidth usage of the at least one data flow to a non real-time application based on said information received from the real-time application.

4. A method according to claim 1, 2 or 3, **characterised by** controlling the bandwidth usage of the at least one data flow to a non real-time application flow by means of:
investigating if a data packet to be sent from the terminal is an acknowledgement packet;
if the data packet is an acknowledgement packet, determining by comparing a window size of the acknowledgement packet to information based on said required bandwidth if the window size should be reduced, which window size defines a maximum amount of unacknowledged data packets that a receiver of the acknowledgement packet should be allowed to send to the terminal on the data flow with which the acknowledgement packet is associated; and
reducing the window size, when so has been determined, by overwriting the window size with a lower value before sending said acknowledgement packet to the receiver.

5. A method according to claim 4, **characterised by** overwriting the window size when the acknowledgement packet is in a transport layer.

6. A method according to claim 4, **characterised by** overwriting the window size when the acknowledgement packet is in an Internet layer.

7. A method according to claim 4, **characterised by** overwriting the window size when the acknowledgement packet is in a physical layer.

8. A method for controlling data flows from a terminal in a communications system, which data flows are carried over at least one communications connection with a limited bandwidth, which method comprises the step of:
initiating, in the terminal, a set-up of a real-time communications session;
**characterised in**,
the method further comprising the steps of:
determining a bandwidth required on the communications connection for a real-time application flow from the terminal to be set up in connection with the communications session;
controlling, through manipulation of sending times of data packets, the bandwidth usage on the communications connection of at least one data flow from a non real-time application on the terminal so as to ensure that said required bandwidth is instantly available to said real-time application flow when it is set up.

9. A method according to claim 8, **characterised by** the controlling step involving reducing the bandwidth usage on the communications connection of the at least one data flow from a non real-time application in order to free bandwidth on the communications connection for the real-time application flow to be set up.

10. A method according to claim 8 or 9, **characterised by** a real-time application determining said required bandwidth from an encoding method chosen for the real-time communications session during the set up of said session;
the real-time application providing a flow control application with information regarding the required bandwidth; and by
the flow control application controlling the bandwidth usage of the at least one data flow from a non real-time application based on said information received from the real-time application.

11. A method according to claim 8, 9 or 10, **characterised by** the bandwidth usage of the at least one data flow to a non real-time application by means of:
investigating if a data packet to be sent from the terminal is an acknowledgement packet;
if the data packet is not an acknowledgement packet, determining by comparing the outgoing flow rate of the data flow with which the packet is associated to information based on said required bandwidth if it is time to send the data packet to a receiver; and
delaying the data packet, when it is not time to send it, until it is time to send the data packet to the receiver.

12. A communications terminal, which terminal is arranged for connection to a communications system by means of a communications connection with a limited bandwidth for carrying data flows, which terminal comprises means for receiving, in the terminal, a set-up message for a real-time communications session **characterised in**,
the terminal further comprising
means for deriving from information in the set-up message a bandwidth required on the communications connection for a real-time application flow to the terminal to be set up in connection with the communications session; and
means for controlling, through manipulation of at least one protocol parameter, the bandwidth usage on the communications connection of at least one data flow to a non real-time application on the terminal so as to ensure that said required bandwidth is instantly available to said real-time application flow when it is set up.

13. A communications terminal according to claim 12, **characterised in that** the means for controlling comprise means for reducing the bandwidth usage on the communications connection of the at least one data flow to a non real-time application in order to free bandwidth on the communications connection for the real-time application flow to be set up.

14. A communications terminal according to claim 12 or 13, **characterised in that** the terminal comprises a real-time application arranged to receive said set-up message and derive said required bandwidth from information in the set-up message regarding an encoding method to be used in the real-time communications session;
in that the terminal further comprises a flow control application which the real-time application is arranged to provide with information regarding the required bandwidth and which flow control application is arranged to control the bandwidth usage of the at least one data flow to a non real-time application based on said information received from the real-time application.

15. A communications terminal according to claim 12, 13 or 14, **characterised by** the means for controlling the bandwidth usage on the communications connection of at least one data flow to a non real-time application comprising:
means for investigating if a data packet to be sent from the terminal is an acknowledgement packet;
means for determining by comparing a window size of the acknowledgement packet to information based on said required bandwidth if the window size should be reduced, which window size defines a maximum amount of unacknowledged data packets that a receiver of the acknowledgement packet should be allowed to send to the terminal on the data flow with which the acknowledgement packet is associated; and
means for reducing the window size by overwriting the window size with a lower value before sending said acknowledgement packet to the receiver.

16. A communications terminal according to claim 15, **characterised in that** the means for overwriting the window size is arranged to overwrite the window size when the acknowledgement packet is in a transport layer.

17. A communications terminal according to claim 15, **characterised in that** the means for overwriting the window size is arranged to overwrite the window size when the acknowledgement packet is in an Internet layer.

18. A communications terminal according to claim 15, **characterised in that** the means for overwriting the window size is arranged to overwrite the window size when the acknowledgement packet is in a physical layer.

19. A communications terminal, which terminal is arranged for connection to a communications system by means of a communications connection with a limited bandwidth for carrying data flows, which terminal comprises means for initiating, in the terminal, a set-up of a real-time communications session;
**characterised in**, the terminal further comprising
means for determining a bandwidth required on the communications connection for a real-time application flow from the terminal to be set up in connection with the communications session; and
means for controlling, through manipulation of sending times of data packets, the bandwidth usage on the communications connection of at least one data flow from a non real-time application on the terminal so as to ensure that said required bandwidth is instantly available to said real-time application flow when it is set up.

20. A communications terminal according to claim 19, **characterised in that** the means for controlling comprise means for reducing the bandwidth usage on the communications connection of the at least one data flow from a non real-time application in order to free bandwidth on the communications connection for the real-time application flow to be set up.

21. A communications terminal according to claim 19 or 20, **characterised in that** the terminal comprises a real-time application arranged to determine said required bandwidth from an encoding method chosen for the real-time communications session during the set up of said session;
in that the terminal further comprises a flow control application which the real-time application is arranged to provide with information regarding the required bandwidth, and which flow control application is arranged to control the bandwidth usage of the at least one data flow from a non real-time application based on said information received from the real-time application.

22. A communications terminal according to claim 19, 20 or 21, **characterised by** the means for controlling the bandwidth usage on the communications connection of at least one data flow from a non real-time application comprising:
means for investigating if a data packet to be sent from the terminal is an acknowledgement packet;
means for determining by comparing the outgoing flow rate of the data flow with which the packet is associated to information based on said required bandwidth if it is time to send the data packet to a receiver; and means for delaying the data packet until it is time to send the data packet to the receiver.

23. A software program arranged to run on a communications terminal in a communications system, which terminal communicates by means of data flows carried over at least one communications connection with a limited bandwidth, which software program comprises code for receiving, in the terminal, a set-up message for a real-time communications session **characterised by,**
code for deriving from information in the set-up message, regarding an encoding method to be used in the real-time communications session, a bandwidth required on the communications connection for a real-time application flow to the terminal to be set up in connection with the communications session; and by
code for providing a second software program on the terminal with information regarding the required bandwidth.

24. A software program arranged to run on a communications terminal in a communications system, which terminal communicates by means of data flows carried over at least one communications connection with a limited bandwidth, which software program comprises code for initiating, in the terminal, a set-up of a real-time communications session;
**characterised by,**
code for determining, from an encoding method chosen for the real-time communications session during the set up of said session, a bandwidth required on the communications connection for a real-time application flow from the terminal to be set up in connection with the communications session; and by
code for providing a second software program on the terminal with information regarding the required bandwidth.

25. A software program arranged to run on a communications terminal in a communications system, which terminal communicates by means of data flows carried over at least one communications connection with a limited bandwidth,
**characterised by,**
code for receiving from a second software program information regarding a bandwidth required on the communications connection for a real-time application flow to the terminal to be set up in connection with a real-time communications session; and by
code for controlling, through manipulation of at least one protocol parameter, the bandwidth usage on the communications connection of at least one data flow to a non real-time application on the terminal so as to ensure that said required bandwidth is instantly available to said real-time application flow when it is set up.

26. A software program according to claim 25, **characterised in that** the code for controlling comprise code for reducing the bandwidth usage on the communications connection of the at least one data flow to a non real-time application in order to free bandwidth on the communications connection for the real-time application flow to be set up.

27. A software program according to claim 25 or 26, **characterised by** the code for controlling comprising:
code for investigating if a data packet to be sent from the terminal is an acknowledgement packet;
code for determining by comparing a window size of the acknowledgement packet to information based on said required bandwidth if the window size should be reduced, which window size defines a maximum amount of unacknowledged data packets that a receiver of the acknowledgement packet should be allowed to send to the terminal on the data flow with which the acknowledgement packet is associated; and
code for reducing the window size by overwriting the window size with a lower value before sending said acknowledgement packet to the receiver.

28. A software program according to claim 27, **characterised in that** the code for overwriting the window size is arranged to overwrite the window size when the acknowledgement packet is in a transport layer.

29. A software program according to claim 27, **characterised in that** the code for overwriting the window size is arranged to overwrite the window size when the acknowledgement packet is in an Internet layer.

30. A software program according to claim 27, **characterised in that** the code for overwriting the window size is arranged to overwrite the window size when the acknowledgement packet is in a physical layer.

31. A software program arranged to run on a communications terminal in a communications system, which terminal communicates by means of data flows carried over at least one communications connection with a limited bandwidth,
**characterised by**,
code for receiving from a second software program information regarding a bandwidth required on the communications connection for a real-time application flow from the terminal to be set up in connection with a real-time communications session; and by
code for controlling, through manipulation of sending times of data packets, the bandwidth usage on the communications connection of at least one data flow from a non real-time application on the terminal so as to ensure that said required bandwidth is instantly available to said real-time application flow when it is set up.

32. A software program according to claim 31, **characterised in that** the code for controlling comprise code for reducing the bandwidth usage on the communications connection of the at least one data flow from a non real-time application in order to free bandwidth on the communications connection for the real-time application flow to be set up.

33. A software program to claim 31 or 32, **characterised by** the code for controlling comprising:
code for investigating if a data packet to be sent from the terminal is an acknowledgement packet;
code for determining by comparing the outgoing flow rate of the data flow with which the packet is associated to information based on said required bandwidth if it is time to send the data packet to a receiver; and
code for delaying the data packet until it is time to send the data packet to the receiver.
